# EUROPÄISCHE PATENTSCHRIFT

(11) **EP 1 563 266 B1**
(45) Veröffentlichungstag und Bekanntmachung des Hinweises auf die Patenterteilung: **27.02.2019**
(21) Anmeldenummer: 03776868.6
(22) Anmeldetag: 24.10.2003
(51) Int. Cl.: G01H 1/00, G01H 3/00

(54) **VERFAHREN ZUR BEWERTUNG VON STÖRGERÄUSCHEN**
METHOD FOR ASSESSING INTERFERING NOISE
PROCEDE POUR EVALUER DES BRUITS PARASITES

(30) Priorität: 31.10.2002 DE 10250739
(43) Veröffentlichungstag der Anmeldung: 17.08.2005
(73) Patentinhaber: Bayerische Motoren Werke Aktiengesellschaft, 80809 München (DE); Zins Ziegler-Instruments GmbH, 41172 Mönchengladbach (DE)
(72) Erfinder: STEINBERG, Klaus, 85419 Mauern (DE); ACHTEN, Tobias, 47800 Krefeld (DE)
(86) Internationale Anmeldenummer: PCT/EP2003/011800
(87) Internationale Veröffentlichungsnummer: WO 2004/040246

(56) Entgegenhaltungen:
- DE-A- 19 626 329

## Beschreibung

Die Erfindung bezieht sich auf ein Verfahren zur Bewertung von Störgeräuschen in Kraftfahrzeugen. Derartige Geräusche treten beispielsweise bei einer Reib-Bewegung von Materialoberflächen auf.

Aus der DE 197 23 728 A1 ist im Zusammenhang mit der Diagnose von Kraftfahrzeugfunktionen ein Verfahren zur Ermittlung einer Haft-Gleit-Bewegung bekannt. Dieses bekannte Verfahren betrifft im Wesentlichen die Unterscheidbarkeit zwischen einem Normalzustand und einem Haft-Gleiten von sich bewegenden Arbeitselementen, wie z. B. Steuerventilen.

Weiterhin ist aus der DE 34 37 661 A1 ein Verfahren zur Bestimmung von reparaturbedürftigen Bauteilen einer Fahrzeugeinheit bekannt. Bei diesem Verfahren werden Fahrzeugeinheiten im Neuzustand im Hinblick auf auftretende Schwingungen vermessen. Insbesondere bei späteren Wartungsarbeiten wird dieselbe Fahrzeugeinheit erneut im Hinblick auf auftretende Schwingungen vermessen. Die Intensitäten der Schwingungen werden miteinander verglichen. Eine unverhältnismäßig hohe Steigerung der Intensität einer Schwingung ist ein Kriterium der Reparaturbedürftigkeit eines Bauteils. Die Vergleichsmessungen sind hierbei nur bei ein und derselben Fahrzeugeinheit möglich. Weiterhin sind hierbei nicht sämtliche in einer Fahrzeugeinheit möglichen Störgeräusche diagnostizierbar.

Aus der DE 33 32 941 A1 ist allgemein eine Gesamtschallanalyse von laufenden Maschinen und Anlagen bekannt, bei der aufgenommene Schalle mit vorgegebenen Schwellenwerten verglichen werden.

In der US 5 551 298 werden durch vorgegebene Vibrationsanregungen verschiedene Bauteile zum Schwingen gebracht. Die aufgenommenen Schwingungen werden mit abgespeicherten Schwingungen im Hinblick auf ihre Frequenz bzw. ihr Frequenzband ausgewertet, um die Quelle eines Geräusches in Form eines bestimmten Bauteils zu identifizieren. Auch hierbei ist nur eine eingeschränkte Geräuschquellen-Diagnose möglich.

Aus dem japanischen Abstract der JP 10246689 A geht eine Maschine hervor, durch die Reibungsgeräusche eines Materials ermittelt werden können.

Schließlich ist DE 199 26 411 C1 ein Verfahren zur Ermittlung der Ursache von Störgeräuschen in Kraftfahrzeugen bekannt, das speziell für Geräusche aufgrund einer Haft-Gleit-Bewegung von Materialoberflächen vorschlägt, diese Geräusche auf den Kontaktort der Materialien bezogen zu speichern.

Die bisherigen Verfahren beschäftigen sich mit dem Problem, die Ursache von Störgeräuschen von verschiedenen Komponenten im Kraftfahrzeug zu ermitteln. Unterschiedliche Komponenten werden unterschiedlich diagnostiziert.

DE 196 26 329 A1 beschreibt ein Verfahren zur Analyse von Schallereignissen. Dabei wird kontinuierlich aus zeitlich zurückliegenden Signalwerten des Schallereignisses ein Referenzsignal gebildet und eine kombinierte Auswertung der spektralen und zeitlichen Änderung des Schallereignisses in Bezug auf das Referenzsignal zur Ausgabe einer Bewertungsgröße vorgenommen.

Es ist Aufgabe der Erfindung, die bekannten Verfahren eingangs genannter Art zu verbessern.

Diese Aufgabe wird durch die Merkmale des Patentanspruchs 1 gelöst. Vorteilhafte Weiterbildungen der Erfindung sind die Gegenstände der abhängigen Ansprüche.

Bei dem erfindungsgemäßen Verfahren zur Bewertung von Störgeräuschen wird nicht zwischen den verschiedenen Möglichkeiten der Geräuscherzeugung (z.B. eine ausschließliche Haft-Gleit-Bewegung von Materialoberflächen) unterschieden. Vielmehr wird das gesamte Geräuschspektrum unabhängig von der Art seiner Entstehung über die vorgegebene Messzeit hinweg untersucht. Vorteilhafterweise wird das Signal hierzu über die Messzeit hinweg gespeichert und zeitgleich ausgewertet.

Im Gegensatz zu einem Verfahren zur Ermittlung eines subjektiv wahrgenommenen Geräuschs, wie es aus der DE 198 44 784 A1 bekannt ist, wird bei der Erfindung bei der Analyse des Störgeräuschs der Zeitbereich nicht verlassen. Bei dem bekannten Verfahren hingegen wird eine Transformation in den Frequenzbereich hinein vorgenommen. Abgesehen davon, dass dabei auch evtl. Störgeräusche in derselben Weise behandelt und damit auch verändert werden, ist ein derartiges Verfahren auf Grund der einem frequenzabhängigen Analyseverfahren eigenen Trägheit nicht exakt in der Lage, zwischen einem hochfrequenten Störgeräusch und dem Hintergrundgeräuschpegel zu unterscheiden.

Die Auswertung der Störgeräusche bei der Erfindung geschieht frequenzbereichsselektiv. Hierzu werden die Geräusche in verschiedene Frequenzbereiche eingeteilt. Innerhalb der Frequenzbereiche werden die Pegeländerungen gegenüber dem Hintergrundgeräusch bestimmt und die so ermittelten Pegeländerungen ausgewertet.

Um das Hintergrundgeräusch zu ermitteln, werden die Geräusche erfindungsgemäß innerhalb ihres Frequenzbereichs mit ersten Zeitfenstern abgetastet und über das Zeitfenster hinweg gemittelt.

Dabei können vorzugsweise die ersten Zeitfenster für die Frequenzbereiche von untereinander gleich langer Dauer sein. Es wird dadurch insbesondere für eine gemeinsame Betrachtung der Geräuschereignisse in den verschiedenen Frequenzbändern eine einheitliche Basis geschaffen.

Zur Ermittlung des instationären Geräuschanteils innerhalb ihres Frequenzbereichs werden die Geräusche erfindungsgemäß mit zweiten Zeitfenstern abgetastet, deren Dauer kleiner als die der ersten Zeitfenster ist. Diese Untersuchungsmöglichkeit ist mit geringem technischem Aufwand darstellbar.

Dabei besitzen die zweiten Zeitfenster für den Bereich höherer Frequenzen eine kleinere Zeitdauer als für den Bereich niederer Frequenzen. Dadurch wird der frequenzbereichsabhängig unterschiedlichen Störgeräusch-Empfindlichkeit des menschlichen Gehörs Rechnung getragen.

Die Pegeländerungs-Häufigkeit instationärer Geräuschereignisse wird aus dem instationären Geräuschanteil bestimmt. Die Pegeländerung wird dabei dann registriert, wenn sie eine vorgegebene Schwelle überschreitet.

Ergänzend können die Pegeländerungs-Amplituden instationärer Geräuschereignisse aus dem instationären Geräuschanteil bestimmt werden. Dadurch wird die Intensität des Störgeräuschs erkennbar.

Eine Gesamtbeurteilung des Geräuschs und eine Unterscheidung zwischen einem akzeptablen und einem inakzeptablen Geräuschverhalten lassen sich besonders einfach erreichen, wenn eine gewichtete Summe der Pegeländerungs-Häufigkeiten und der Pegeländerungs-Amplituden über alle Frequenzbereiche gebildet wird.

Dadurch ergibt sich ein Verfahren zur Bewertung von Störgeräuschen, das eine objektive Aussage über Störgeräusche liefert.

Die Erfindung ist anhand der Figuren weiter erläutert.

Ausgangspunkt für das erfindungsgemäße Analyseverfahren ist die Tatsache, dass sich ein Gesamtgeräusch aus einem (quasi-)stationären Hintergrundgeräusch (Rauschen, Wind, Produktionsgeräusche) und den zu detektierenden instationären Störgeräuschen zusammensetzt. Das Hintergrundgeräusch zeigt sich häufig in einem Schallpegel-Zeit-Verlaufsdiagramm als Offset.

Unser Ohr reagiert sehr empfindlich auf "Veränderungen". Veränderungen im Gesamtpegel (Summe über alle Frequenzen) sind jedoch nicht ausreichend, um ein Geräusch als störend zu empfinden. Vielmehr wird ein Geräusch als störend wahrgenommen, wenn sich seine tonale Zusammensetzung ändert. Die Erfindung trägt dem Rechnung, indem die tonale Zusammensetzung detektiert wird.

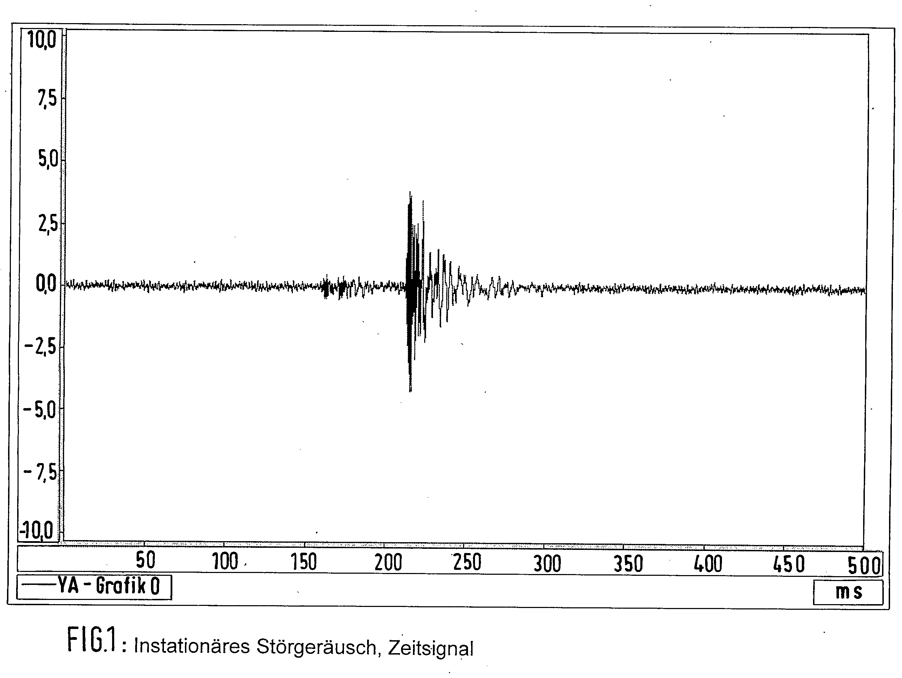

Hierzu wird ein beispielhaftes, in Figur 1 gezeigtes und über eine vorgegebene Messzeit aufgenommenes Geräusch in verschiedene (hier drei) Frequenzbänder zerlegt (tieffrequenter, mittelfrequenter und hochfrequenter Anteil).

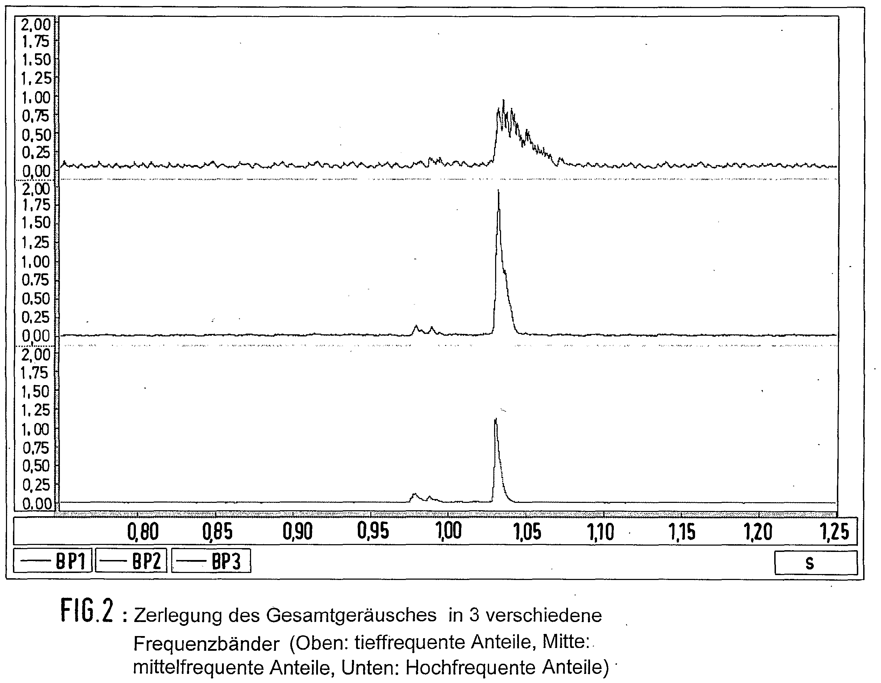

Die drei Anteile zu Fig. 1 sind in Fig. 2 gezeigt. Die Realisierung geschieht über einfache Hoch-, Tief- bzw. Bandpassfilter (nicht gezeigt). Die drei Anteile liegen somit als Pegel-Zeit-Verläufe in den einzelnen Frequenzbändern vor.

Diese Verläufe in den einzelnen Frequenzbändern werden wie folgt untersucht:
Zunächst wird der quasistationäre Hintergrundpegel durch eine Mittelung über der Zeit mit einer relativ großen Zeitkonstante von 1s (gleitende Effektivwertbildung mit einem ersten und für alle Frequenzbereiche gleich langen Zeitfenster von 1s) ermittelt. Impulsive Spitzen werden durch diese Mittelung geglättet und ein etwa konstanter Pegel erzielt.

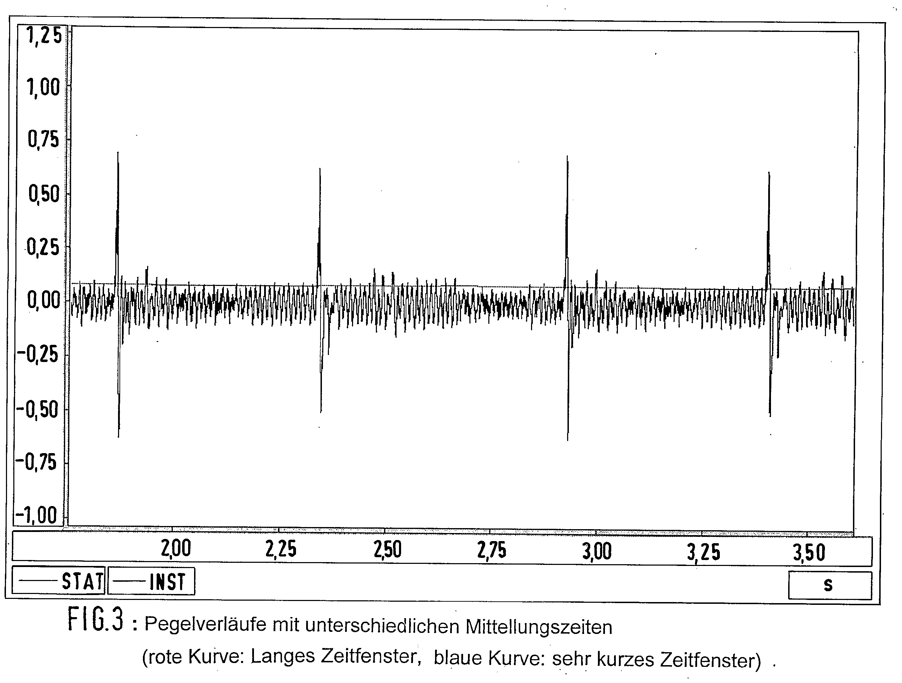

Eine zweite Mittelung mit wesentlich kürzeren zweiten Zeitfenstern (je nach Frequenzband mit unterschiedlicher Länge zwischen 0,1s und 0,005s) reagiert wesentlich empfindlicher auf kurzzeitige Geräuschimpulse und dient somit dazu, den instationären Anteil festzustellen. Dieser ist in Fig. 3 gezeigt.

Es wird nun die Veränderung des Geräuschpegels in den verschiedenen Frequenzbändern untersucht. Die Veränderung ist dabei definiert als Pegelunterschied zwischen den Zeitpunkten T und T+Tmittel, wobei Tmittel die jeweilige Mittelungszeit ist. Diese Pegelveränderung wird vom menschlichen Gehör bei verschiedenen Frequenzen unterschiedlich gut wahrgenommen.

Eine Untersuchung ist auf die Relation der für ein instationäres und als störend empfundenes Geräusch typischen Pegeländerung zum konstanten Hintergrundgeräusch gerichtet. Ist es sehr laut (starkes Hintergrundgeräusch), so werden kleine Veränderungen nicht wahrgenommen, während dieselben Änderungen bei geringem Hintergrundgeräusch gut wahrgenommen werden. Daher wird das Verhältnis zwischen Pegeländerung und konstantem Hintergrundpegel bestimmt. Ist dieses Verhältnis größer als ein Schwellenwert x, so wird das Geräusch hörbar. Dies wird als Entscheidungskriterium zwischen stationär und instationär benutzt und legt eine Art "Schalter" um. Zeitbereiche in denen Geräusche hörbar werden (instationäre Zeitbereiche) werden somit von Bereichen getrennt, in denen das Geräusch als "konstantes" Umgebungs-/Hintergrundgeräusch wahrgenommen wird.

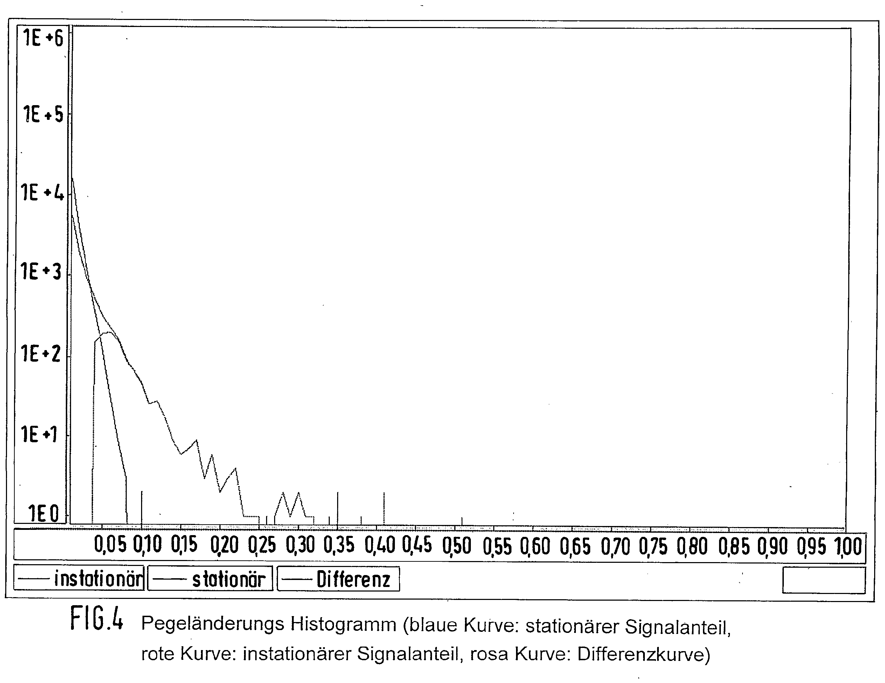

Zusätzlich zur Wahrnehmung der (Stör-)geräusche als solches wird auch die Frage untersucht, wie störend sie sind. Hierzu wird eine Klassierung vorgenommen. Hierzu wird untersucht, wie oft und mit welcher "Lautstärke" diese Veränderungen auftreten. Hierzu werden die insgesamt zu erwartenden Pegeländerungen in X (z.B. X=100) Klassen von 0 (konstant) bis MAXimal eingeteilt und gezählt, wie oft Pegelveränderungen in die jeweilige Klasse fallen Es ergibt sich ein Histogramm, (x-Achse: Pegelveränderung, y-Achse: Häufigkeit). Dies in Fig. 4 gezeigt.

Zusammengefasst seine hier nochmals die wesentlichen Merkmale des erfindungsgemäßen Verfahrens:
In jedem Frequenzband sollen sprunghafte Amplitudenänderungen detektiert werden. Betrachtet man nun den tieffrequenten Signalanteil, so ändert sich dort der Mittelwert, d.h. der quasistationäre Hintergrundpegel aufgrund der ausschließlich tieferen Frequenzanteile in der Regel deutlich langsamer als z.B. in den Frequenzbändern für den mittelfrequenten oder hochfrequenten Signalanteil. Die Zeitfenster zur Glättung des stationären Signalanteils (1s in allen drei Frequenzbändern) sind hiervon völlig unabhängig.

Der instationäre Pegel wird jedoch über einen gleitenden Effektivwert mit verschiedenen Zeitfenstern berechnet. Das Zeitintervall, in dem die Veränderung der Amplitude betrachtet wird, ist auf die "Anstiegsdauer" (ansteigende Flanke) typischer impulsiver Störgeräusche angepasst. Seine zeitliche Dauer hängt wiederum vom Frequenzband ab und beläuft sich z.B. auf 0,1s beim tieffrequenten Frequenzband und 0,005s bei hochfrequenten Frequenzband.

Unabhängig davon, ob im beobachteten Zeitbereich (1s) nur einzelne wenige Störgeräusche oder aber eine Vielzahl von Störgeräuschen auftreten, werden diese auf Grund ihrer für ein Störgeräusch typischen Pegeländerung erkannt und gehen nicht in die Bildung des quasistationären Mittelwerts (=Hintergrundgeräusch) ein. Sie werden vielmehr stets auf denselben unveränderten quasistationären Mittelwert bezogen und demgegenüber mit ihrer unveränderten Amplitude erkannt. Dadurch wird es möglich, Störgeräusche schnell und eindeutig zu erkennen.

## Patentansprüche

1. Verfahren zur Bewertung von Störgeräuschen in Kraftfahrzeugen, bei welchem die während einer vorgegebenen Messzeit auftretenden Geräusche in verschiedene Frequenzbereiche eingeteilt werden, wobei die Geräusche zur Ermittlung eines Hintergrundgeräuschs innerhalb ihres Frequenzbereichs mit ersten Zeitfenstern abgetastet und über das erste Zeitfenster hinweg gemittelt werden, wobei die Geräusche zur Ermittlung eines instationären Geräuschanteils innerhalb ihres Frequenzbereichs mit zweiten Zeitfenstern abgetastet und über das zweite Zeitfenster gemittelt werden, wobei die Dauer der zweiten Zeitfenster kleiner als die der ersten Zeitfenster ist, wobei die zweiten Zeitfenster für den Bereich höherer Frequenzen eine kleinere Zeitdauer als für den Bereich niederer Frequenzen besitzen, wobei Pegeländerungen als Pegelunterschiede zwischen aufeinanderfolgenden Zeitpunkten T und T+Tmittel des über die zweiten Zeitfenster gemittelten instationären Geräuschanteils ermittelt werden, wobei Tmittel die jeweilige Mittelungszeit ist, wobei innerhalb der Frequenzbereiche ein Verhältnis zwischen den Pegeländerungen und dem Hintergrundgeräusch bestimmt wird, und wobei die so ermittelten Pegeländerungen hinsichtlich der Häufigkeit ausgewertet werden, mit der instationäre Geräuschereignisse innerhalb des instationären Geräuschanteils mit einem Verhältnis größer als ein Schwellenwert x auftreten.

2. Verfahren nach Anspruch 1, **dadurch gekennzeichnet, dass** die Pegeländerungen hinsichtlich der Amplituden ausgewertet werden, mit der die instationären Geräuschereignisse innerhalb des instationären Geräuschanteils auftreten.

3. Verfahren nach Anspruch 2, **dadurch gekennzeichnet, dass** eine gewichtete Summe der Pegeländerungs-Häufigkeiten und der Pegeländerungs-Amplituden über alle Frequenzbereiche bestimmt wird.

4. Verfahren nach einem der vorhergehenden Ansprüche, **dadurch gekennzeichnet, dass** die ersten Zeitfenster für die Frequenzbereiche von untereinander gleich langer Dauer sind.

## Claims

1. A method for assessing interfering noise in motor vehicles, in which the noises occurring during a predefined measurement time are divided into various frequency ranges, wherein the noises are scanned within theirfrequency range with first time windows and are averaged over the first time window, wherein for determining an unsteady noise component the noises are scanned with second time windows and are averaged over the second time window, wherein the period of the second time window is smaller than that of the first time window, wherein the second time windows for higher frequency ranges have a shorter time duration than for the lower frequency range, wherein level changes are determined as level differences between successive points in time T and T+Tmittel of the unsteady noise component averaged over the second time window, wherein Tmittel is the particular averaging time, wherein the ratio between the level changes and the background noise is determined within the frequency ranges, and wherein the level changes thus determined are evaluated in respect of the frequency with which unsteady noise events occur within the unsteady noise component with a ratio greater than a threshold value x.

2. A method according to claim 1, **characterised in that** the level changes are evaluated in respect of the amplitudes with which the unsteady noise events occur within the unsteady noise component.

3. A method according to claim 2, **characterised in that** a weighted sum of the level change frequencies and the level change amplitudes over all frequency ranges is determined.

4. A method according to any one of the preceding claims, **characterised in that** the firsttime windows for the frequency ranges mutually have the same duration.

## Revendications

1. Procédé permettant dévaluer des bruits parasites dans des véhicules, selon lequel les bruits se présentant pendant une durée de mesure prédéfinie sont subdivisés en différentes plages de fréquences, les bruits sont palpés avec une première fenêtre de temps pour déterminer le bruit de fond dans leur plage de fréquences, et moyennés dans la première fenêtre de temps, les bruits sont palpés avec une seconde fenêtre de temps pour déterminer la fraction de bruits non stationnaire dans leur plage de fréquence et moyennés dans la seconde fenêtre de temps, la durée de la seconde fenêtre de temps étant inférieure à celle de la première fenêtre de temps, la seconde fenêtre de temps ayant une plus petite durée pour la plage de fréquences plus élevées que pour la plage de fréquences plus faibles, des variations de niveau étant déterminées sous la forme de différences de niveau entre des instants successifs T et T+T mittel de la fraction des bruits non stationnaire moyennée sur la seconde fenêtre de temps, T mittel étant la durée moyenne respective, dans la plage de fréquences, le rapport entre les variations de niveau et le bruit de fond étant déterminé, et les variations de niveau ainsi déterminées étant évaluées concernant la fréquence de survenance avec laquelle des événements sonores non stationnaires se présentent dans la fraction de bruit non stationnaire avec une proportion supérieure à une valeur de seuil.

2. Procédé conforme à la revendication 1,
**caractérisé en ce qu'**
on évalue les variations de niveau concernant les amplitudes avec lesquelles les éléments sonores non stationnaires sont présentent dans la faction de bruit non stationnaire.

3. Procédé conforme à la revendication 2,
**caractérisé en ce qu'**
on détermine une somme pondérée de la fréquence de survenance des variations de niveau et des amplitudes de variation de niveau dans toutes les plages de fréquences.

4. Procédé conforme à l'une des revendications précédentes,
**caractérisé en ce que**
les premières fenêtres de temps pour les plages de fréquences sont des durées essentiellement de même longueur.
